# DEMANDE DE BREVET EUROPEEN

(11) **EP 0 703 719 A1**
(43) Date de publication de la demande: **27.03.1996**
(21) Numéro de dépôt: 95202475.0
(22) Date de dépôt: 13.09.1995
(51) Int. Cl.: H04R 5/02, H04B 1/38

(54) **Système audio embarqué**

(30) Priorité: 21.09.1994 FR 9411283
(71) Demandeur: PHILIPS ELECTRONIQUE GRAND PUBLIC, F-92150 Suresnes (FR); Philips Electronics N.V., NL-5621 BA Eindhoven (NL)
(72) Inventeur: Faucher, André, F-75008 Paris (FR)
(74) Mandataire: Caron, Jean

(57) **Abrégé**

Ce système est muni d'un écran d'affichage (10), d'une pluralité d'unités fonctionnelles distinctes (12, 13, 14, 26, 27) dont une seule est en service à la fois, et d'un élément produisant des sons (11, 28).
Le rôle qui est alloué à chacune des touches de commande ainsi que les informations à afficher dépendent de l'unité fonctionnelle qui est en service, alors que les signaux de son appliqués à l'élément produisant des sons ne proviennent pas obligatoirement de l'unité qui est en service.

Applications : systèmes embarqués sophistiqués.

## Description

La présente invention concerne un système audio embarqué dans un véhicule automobile, muni d'un processeur assurant la gestion de touches de commande portées par un satellite, d'un écran d'affichage, d'un élément produisant des sons, de plusieurs unités fonctionnelles distinctes susceptibles chacune de délivrer des signaux de son, plusieurs modes de fonctionnement étant prévus dans le système selon qu'une unité fonctionnelle ou une autre est en service.

L'invention s'applique particulièrement aux systèmes embarqués les plus sophistiqués, qui comportent un grand nombre de possibilités d'utilisation.

Un système selon le préambule ci dessus est connu du document EP-A-0 437 396. Dans ce système, il y a plusieurs unités fonctionnelles, appelées appareils, qui communiquent avec une unité de gestion, et chacune possède son propre processeur appelé unité centrale. Un seul appareil est actif à un moment donné et c'est l'appareil actif qui détermine l'affichage et traite les commandes externes, même lorsqu'elles concernent les autres appareils.

Un but de l'invention est de simplifier la programmation et l'utilisation d'un tel système.

Dans un système selon l'invention, le dit processeur comporte des moyens pour, selon le mode, c'est-à-dire selon l'unité fonctionnelle qui est en service, allouer à une même touche de commande un rôle différent et afficher des informations différentes, et pour déterminer, indépendamment du mode, l'origine des signaux de son qui sont appliqués à l'élément produisant des sons.

L'invention est donc basée sur l'idée de dissocier la notion de mode de la notion de source de signaux de son : par exemple en mode "AUDIO", on pourra entendre le son du téléphone sans pour autant être obligé de passer en mode "TÉLÉPHONE", on pourra aussi continuer à écouter la radio en mode de mise à l'heure de l'horloge ou dans certains états du mode "NAVIGATION", etc
En outre, le système est avantageusement muni de moyens pour allouer un rôle à une touche de commande en correspondance avec un mode tout en affichant des informations correspondant à un autre mode.

En mode "TÉLÉPHONE" mais hors communication, les moyens pour déterminer l'origine des signaux de son peuvent sélectionner le son de la source audio courante.

En mode "AUDIO" dans le cas de réception d'un appel téléphonique, les moyens pour déterminer l'origine des signaux de son peuvent sélectionner le son de la communication téléphonique, jusqu'à la fin de celle-ci, tout en restant dans le mode "AUDIO".

En mode "AUDIO" encore, et en écoute d'une source déterminée, les moyens pour déterminer l'origine des signaux de son peuvent sélectionner transitoirement une autre source, lorsque l'utilisateur appuie sur une touche déterminée.

En mode "AUDIO" toujours, les moyens pour déterminer l'origine des signaux de son peuvent sélectionner un message d'avertissement routier ou de guidage, sans quitter le mode "AUDIO".

Ces aspects de l'invention ainsi que d'autres aspects plus détaillés apparaîtront plus clairement grâce à la description suivante d'un mode de réalisation non limitatif.

La figure 1 est un schéma bloc des éléments d'un système embarqué.

La figure 2 représente un jeu de commandes dit "satellite".

La figure 3 représente plusieurs exemples de présentations d'informations par un écran d'affichage.

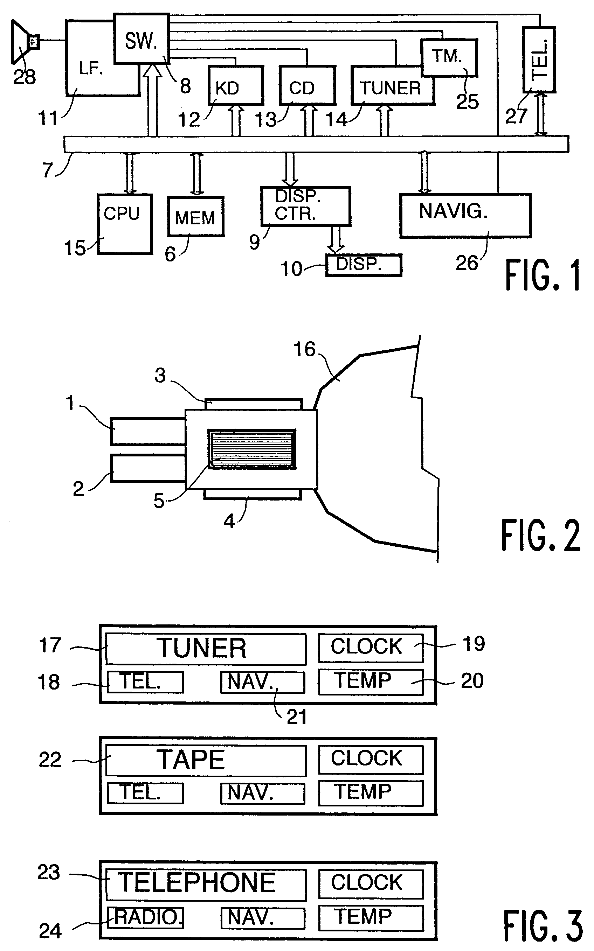

Le système embarqué de la figure 1 comprend un processeur central 15 assurant la gestion d'un ensemble de plusieurs unités fonctionnelles distinctes et communiquant avec elles par un bus 7 de données et d'adresses. Une mémoire 6 est associée au processeur 15. Un tel système pourrait en outre comprendre plusieurs autres processeurs (non représentés), notamment dans chacune des unités fonctionnelles, processeurs ayant des rôles spécialisés et qui n'entrent pas dans le cadre de la présente invention.

Le système comprend un élément 11 produisant des sons, en pratique un amplificateur connecté à un haut-parleur 28 ou à un ensemble de haut-parleurs. A l'entrée de cet élément est amené un signal de son en provenance d'une parmi une pluralité de sources. Ces sources sont de plus en plus nombreuses aujourd'hui, incluant par exemple un syntoniseur radio 14, un lecteur de cassettes magnétiques audio 12, un lecteur de disque compact 13, une source d'information de trafic 25 reliée au syntoniseur radio 14 (supposé être muni de circuits de décodage de type connus par exemple sous le sigle RDS), un téléphone 27, un générateur d'annonces vocales, compris dans un circuit de navigation 26, pour indiquer la route à suivre, etc. Le système comprend aussi un afficheur 10, avec par exemple un panneau à cristaux liquides ou un panneau électrochimique, relié au bus de données 7 par un circuit d'interface et de commande 9.

Plusieurs modes de fonctionnement sont prévus, c'est-à-dire qu'il existe plusieurs modules logiciels indépendants, l'un ou l'autre étant utilisé selon l'unité fonctionnelle (12, 13, 14, 25, 26, 27) qui est en service, et le système est muni de touches de commande auxquelles le processeur peut allouer des rôles différents selon le mode de fonctionnement, c'est-à-dire selon l'unité fonctionnelle qui est en service.

Certaines de ces touches peuvent être placées dans un organe appelé "satellite". Un tel satellite est situé derrière le volant pour que les touches puissent être manipulées sans lever les mains du volant et sans quitter la route des yeux. Le satellite de la figure 2 est attaché à une colonne de direction 16, et comprend cinq éléments de commande : quatre touches portant les références 1, 2, 3, 4, et une molette portant la référence 5.

Des éléments de commutation 8, constitués d'une pluralité de commutateurs électroniques commandés à partir du bus 7, permettent de sélectionner la source de signaux de son qui est appliquée à l'élément produisant des sons. Le processeur comporte des moyens, constitués par un élément de logiciel, pour commander les commutateurs 8, via le bus 7.

Il comprend en outre des moyens, également constitués par un élément de logiciel, pour déterminer le rôle qui est alloué à chacune des touches de commande, c'est-à-dire pour déterminer ce qui doit être exécuté lorsqu'une de ces touches est pressée par un utilisateur.

En outre, dans chacun des différents modes, différents états du système sont possibles. Différents modes d'un système embarqué peuvent être par exemple :
- ARRET : le système est arrêté,
- VEILLE : certains éléments du système sont sous tension, entre autres par exemple le syntoniseur RDS, dès que le contact d'allumage du véhicule est établi.
- HORLOGE : lecture ou mise à l'heure de l'horloge.
- AUDIO : mode dans lequel une source de signaux de son est habituellement connectée à un élément produisant des sons. Dans ce mode, les différentes unités fonctionnelles en service peuvent être par exemple :
   - le syntoniseur radio 14,
   - le lecteur de cassette magnétique audio 14,
   - le lecteur de disque compact 13,
- TÉLÉPHONE : dans ce mode, les différents états possibles sont par exemple :
   - phase d'appel sortant (numérotation),
   - phase d'appel entrant (sonnerie),
   - phase de communication,
   - phase de repos, avec ou sans mode antivol.
- NAVIGATION : indication de la route à suivre.
- MESSAGE D'INFORMATION : en cas de réception d'un tel message en provenance des services routiers (entre autres dans le cas de radiodiffusion selon le standard connu sous l'appellation RDS/TP).
- ALARME : détection de tentatives d'effraction, et génération de signaux d'appel au cas d'une telle détection.

Il est clair que selon les états et le mode, certains organes du système sont dans des situations différentes. Des plages d'affichage de l'afficheur présentent des messages de nature différente, et certaines touches ont des rôles différents.

Comme l'élément d'affichage et le processeur ont tous deux une fonction centrale, c'est-à-dire qu'ils sont utiles quel que soit le mode, le processeur peut avantageusement être situés dans le même boîtier que l'afficheur, notamment lorsque l'afficheur est situé dans un boîtier différent de celui de l'ensemble [récepteur radio + lecteur de cassettes].

A titre d'exemple, l'afficheur peut présenter en mode "VEILLE" une plage d'affichage de l'heure et une plage d'affichage de la température extérieure, alors qu'en mode "AUDIO" et plus spécifiquement en réception radio, il affichera la station reçue. En mode "TÉLÉPHONE", et en phase d'appel sortant (numérotation), il affichera par exemple le numéro appelé, ceci en sus d'affichages de plus petit format fournissant éventuellement d'autres renseignements à titre indicatif.

La figure 3 illustre un tel afficheur dans trois cas : en haut et au milieu le mode en cours est le mode "AUDIO", en bas le mode en cours est le mode "TÉLÉPHONE". L'afficheur du haut sur la figure correspond à une réception radio en cours, il fournit des informations 17 provenant du syntoniseur 14, des informations 19 indiquant l'heure, des informations 20 concernant la température, des informations 18 concernant le téléphone 27, et des informations 21 provenant du système de navigation 25. Il est clair que l'afficheur ne présente pas en réalité les mots "TUNER" ou "NAV.", etc, mais des valeurs ou des messages renseignant sur les fonctions correspondantes.

L'afficheur du milieu sur la figure correspond à l'écoute d'une cassette audio, il fournit des informations 22 provenant du lecteur de cassettes 12, et toujours (au même endroit que dans l'écran du haut) des informations indiquant l'heure, des informations concernant la température, des informations concernant le téléphone 27, et des informations provenant du système de navigation 25.

L'afficheur du bas sur la figure correspond à l'utilisation du téléphone, il fournit des informations 23 provenant du téléphone 27, et toujours (au même endroit que dans l'écran du haut) des informations indiquant l'heure, des informations concernant la température, et des informations provenant du système de navigation 25. Par contre les informations 18 indiquées "tel." dans l'afficheur du haut sont remplacées par des informations 24, par exemple concernant la réception radio.

En ce qui concerne les touches et plus particulièrement celles du satellite sous le volant, il est possible de leur allouer, toujours à titre d'exemple, les rôles suivants :
- en mode "VEILLE" seule la touche 4 est active, elle permet de mettre le système en activité, en choisissant le mode dans lequel il va être utilisé.
- en mode "AUDIO", avec le son en provenance d'une bande magnétique, la touche 1 augmente le volume du son, la touche 2 diminue le volume du son, la touche 3 commande la lecture de la bande en sens inverse, la touche 4 permet de changer de mode, la molette 5 permet de "naviguer" d'une plage à la suivante ou à la précédente,
- en mode "AUDIO", avec le son en provenance d'un syntoniseur radio, les touches 1 et 2 ont le même rôle que précédemment, la touche 3 commande la recherche de stations, la touche 4 permet encore de changer de mode, la molette 5 commande le passage d'une station préréglée à la suivante,
- en mode de mise à l'heure de l'horloge, la touche 1 change les heures, la touche 2 change les minutes, les touches 3, 4 et la molette sont inactives,
- en mode "TÉLÉPHONE", les touches 1 et 2 ont le même rôle qu'en mode "AUDIO", les touches 3, 4 et la molette sont inactives,
- en mode "MESSAGE D'INFORMATION", le satellite est inactif.

Dans la mémoire de programme du processeur 15, l'élément de logiciel qui détermine la source des signaux de son appliqués à l'élément produisant des sons est indépendant de celui qui détermine le rôle alloué à chacune des touches de commande et de celui qui détermine quelles sont les informations à afficher.

En d'autres termes, lorsque l'un de ces logiciels ou sous-programmes est mis en oeuvre, cela n'a aucune influence sur les paramètres de l'autre. Si par exemple le sous-programme de gestion d'un mode est appelé et le mode changé, le sous-programme de gestion des sources de son n'est pas affecté, et vice-versa.

Ceci a pour effet qu'il est possible d'obtenir les effets suivants, toujours donnés à titre d'exemple :
- en mode "TÉLÉPHONE" mais hors communication, entendre le son de la source audio courante,
- en mode "AUDIO" dans le cas de réception d'un appel téléphonique, rester dans le mode "AUDIO" et entendre néanmoins le son de la communication téléphonique, jusqu'à la fin de celle-ci,
- en mode "AUDIO", et en écoute d'une source déterminée, entendre transitoirement une autre source par appui sur une touche,
- en mode "AUDIO", entendre un message d'avertissement routier ou de guidage sans quitter le mode "AUDIO".

On comprend donc en quoi l'indépendance entre les moyens pour déterminer la source de signaux de son qui est appliquée à l'élément produisant des sons et les moyens pour déterminer le rôle alloué à chacune des touches de commande et pour déterminer les informations à afficher apporte quelque chose de différent : dans l'art antérieur, lors par exemple de l'arrivée d'un appel téléphonique, on devait passer en mode "TÉLÉPHONE" pour traiter cet appel. Avec l'invention, ce dernier peut être traité en mode "AUDIO", c'est-à-dire en gardant aussi bien le rôle dédié aux touches que la nature de l'affichage dans ce mode.

## Revendications

1. Système audio embarqué dans un véhicule automobile, muni d'un processeur assurant la gestion
- de touches de commande, portées par un satellite
- d'un écran d'affichage,
- d'un élément produisant des sons,
- de plusieurs unités fonctionnelles distinctes susceptibles chacune de délivrer des signaux de son,
plusieurs modes de fonctionnement étant prévus dans le système selon qu'une unité fonctionnelle ou une autre est en service,
**caractérisé en ce que** le dit processeur comporte des moyens pour
- selon le mode, c'est-à-dire selon l'unité fonctionnelle qui est en service, allouer à une même touche de commande un rôle différent, et afficher des informations différentes,
- déterminer, indépendamment du mode, l'origine des signaux de son qui sont appliqués à l'élément produisant des sons.

2. Système audio embarqué selon la revendication 1, **caractérisé en ce qu**'il est muni de moyens pour allouer un rôle à une touche de commande en correspondance avec un mode tout en affichant des informations correspondant à un autre mode.

3. Système audio embarqué selon l'une des revendications 1 ou 2, **caractérisé en ce que**, en mode "TÉLÉPHONE" mais hors communication, les moyens pour déterminer l'origine des signaux de son sélectionnent le son de la source audio courante.

4. Système audio embarqué selon l'une quelconque des revendication précédentes, **caractérisé en ce qu**'en mode "AUDIO", dans le cas de réception d'un appel téléphonique, les moyens pour déterminer l'origine des signaux de son sélectionnent le son de la communication téléphonique, jusqu'à la fin de celle-ci, tout en restant dans le mode "AUDIO".

5. Système audio embarqué l'une quelconque des revendication précédentes, **caractérisé en ce que**, en mode "AUDIO" et en écoute d'une source déterminée, les moyens pour déterminer l'origine des signaux de son sélectionnent transitoirement une autre source, lorsque l'utilisateur appuie sur une touche déterminée.

6. Système audio embarqué l'une quelconque des revendication précédentes, **caractérisé en ce que**, en mode "AUDIO", les moyens pour déterminer l'origine des signaux de son sélectionnent un message d'avertissement routier ou de guidage, sans quitter le mode "AUDIO".
